# EUROPEAN PATENT SPECIFICATION

(11) **EP 3 933 146 B1**
(45) Date of publication and mention of the grant of the patent: **10.09.2025**
(21) Application number: 20183436.3
(22) Date of filing: 01.07.2020
(51) Int. Cl.: E04H 12/08, F16B 43/00

(54) **STUD SYSTEM FOR CONNECTING FLANGES**
BOLZENSYSTEM FÜR VERBINDUNGSFLANSCHE
SYSTÈME DE GOUJONS POUR RACCORDER DES BRIDES

(43) Date of publication of application: 05.01.2022
(73) Proprietor: Siemens Gamesa Renewable Energy A/S, 7330 Brande (DK)
(72) Inventor: Klaassen, Mark, 2274 TX Voorburg (NL); De Jong, Erwin, 2582 KV Den Haag (NL)
(74) Representative: SGRE-Association

(56) References cited:
- EP-A1- 2 006 471
- WO-A1-2018/095497
- NL-C1- 1 004 960
- US-A1- 2013 004 264

## Description

The invention describes a stud system for connecting flanges, a flange with such stud system, a method of assembling a tower, e.g. a wind turbine tower and such tower.

Tall towers such as wind turbine towers are generally constructed by connecting tower sections together. To this end, each tower section is equipped with flanges. A common flange shape is the "L-flange", and complementary L-flanges are connected together by fasteners such as bolts arranged in a bolt circle.

Large wind turbines of the types currently in development have very long rotor blades and therefore require taller towers. However, the limited load-bearing capacity of the commonly used L-flange connection places constraints on the tower structure.

To provide a better flange connection, lately so-called X-flanges are used. The key feature of these new flanges is the ability to transfer much higher loads compared to conventional (L-)flanges, mentioned above. First ideas of an 'X-flange' are e.g. described in patent NL C 1004960. X-flanges are often combined with the L-shape, resulting in an 'XL-flange', i.e. a flange with an L-circle of apertures (often an inner circle) and a region of X-shaped apertures. Thus, the XL-flange is special a variant of the X-flange.

NL 1004960 C1 describes a structure that is terminated with a flange. The flanges abut with their contact surface normal to the center line of the structures. The axis of the securing bolt intersects the center line of the structures at an oblique angle. The axis of the bolt again intersects the center line of the structures at an oblique angle.

EP 2006471 A1 discloses a wind turbine tower with a number of segments made of flat plates which are connected to each other to form a polygonal cross section.

WO 2018095497 A1 relates to an assembly of a wind turbine with two structural parts comprising flanges to be connected by bolts such that the flanges of the parts are centrally and rotationally aligned, wherein boreholes in the flanges of the parts are matched. The assembly further comprises rotational guide members releasably attached to the flanges. Each of the rotational guide members comprises a U-shaped or L-shaped structure of leg portions connected by a central portion. One leg portion ending in a positioning portion shaped to be inserted into a borehole of the flange, and the other leg portion comprising a stop member. One of the rotational guide members is U-shaped. The stop member of the first rotational guide member is configured for abutment to the second leg portion of the second rotational guide member when the flanges of the first and second structural parts are centrally and rotationally aligned.

US 2013/004264 A1 describes a crosspiece including two terminal surfaces and a pipe with a longitudinal axis that is essentially perpendicular to the terminal surfaces, includes two parts, each having a terminal surface, a first part including an edge that can be flattened against an edge of the other part, with the edges having shapes that immobilize the two parts in the direction of the longitudinal axis that makes it possible to adjust the the two parts to obtain a desired length between the terminal surfaces.

It is therefore an object of the invention to provide an improved flange connection that overcomes the problems described above and to enable a fast and secure connection of flanges.

This object is achieved by a stud system for connecting flanges according to claim 1, a flange with such stud system according to claim 8 and a method of assembling a tower according to claim 9.

In the following, for the sake of simplicity but without restricting the invention in any way, it may be assumed that the invention pertains to studs made for connecting flanges of tower sections, for example a wind turbine tower section. With the term "stud" also a bolt or a screw is meant, generally any longitudinal fastener with a thread that is able to connect flanges with blind openings. A tower section may also be referred to as a "tower shell".

An embodiment of the inventive flange is "part of" the tower section at the time when the tower sections are being connected. This shall be understood to mean that a tower section and its flange may be regarded as a single entity, e.g. formed as a single body. Equally, the tower section and its flange may be manufactured separately and then joined, for example a flange may be welded to a steel tower shell, or the upright cylindrical portion of a flange may be embedded in an outer end of a concrete tower shell.

The flange comprises a bolt circle, wherein especially the invention is advantageous for X-flanges with a respective bolt circle with inclined openings. The inclined openings of the X-flange extend from the flange connection face into the body of the flange. One advantageous strategy is to have the studs pre-installed on the top flange, thus, reducing construction time while assembling the tower, since the studs do not have to be inserted on-site.

A stud system according to the invention is designed for connecting a first flange to a second flange of a tower, especially a wind turbine tower. The flanges, especially X-flanges, comprise annular arrangements of openings in the first flange corresponding to annular arrangements of threaded blind openings in the second flange, with a predefined opening-length and a predefined opening-diameter of the openings in the first flange and a predefined non-threaded length and a predefined threaded length of the threaded blind openings in the second flange.

The stud system comprises the following components:
- A stud bolt with a head end, a threaded end and an intermediate portion between the head end and the threaded end. The stud bolt is a stud (the term "stud bolt" is used to not confuse it with the "stud system"). The threaded end is preferably the threaded portion of the stud bolt that is intended to be screwed into the thread of a threaded blind opening of a flange. The head end is especially the portion of the stud bolt emerging from the opening of the flange when the stud bolt is screwed into the thread of the blind opening. The intermediate portion is the portion between. It can be a shank or threaded or partly both.
- A spacer tube partly encompassing the stud bolt with an outer diameter bigger than the predefined opening-diameter. The big outer diameter of the spacer tube prevents the stud bolt to slip into an opening of the flange as long as the spacer tube is connected with the stud bolt.

The stud bolt comprises stopping means at the head end, **e.g.** a nut, preventing the spacer tube from slipping over the head end. Furthermore, the spacer tube is constructed such that it can be removed laterally from the stud bolt.

This has the advantage that a stud bolt can be arranged in a hole of a flange with its threaded end (and possibly with a part of the intermediate portion), but does not completely slip into the opening (due to the dimensions of the spacer tube and since the spacer tube cannot slip from the head end). By removing the spacer tube laterally from the stud bolt, the stud bolt slips into the opening (advantageously especially after flanges have been arranged over another) and can be used to connect two flanges. Thus, a flange pre-equipped with stud systems in its openings can be arranged over another flange, the spacer tubes can be removed and the stud bolts fall into fastening positions. This accelerates the manufacturing of a tower.

It should be noted that the flange itself is not part of the stud system, however, the dimensions of the flange are known and a stud system is designed to fit for an individual group of flanges with similar dimensions. This means that the general setup of the stud system always stays the same, but its dimensions, especially the length and diameter of its stud bolt and the length and diameter of the spacer tube depends on the application, i.e. the dimensions of the flange the stud system should be applied.

For an easy arrangement of two flanges it is preferred that the spacer tubes are dimensioned such that the threaded ends do not stick out at the bottom of a pre-equipped flange, i.e. the flange contact surface, (or just for a small portion). However, also a setup where the threaded ends are sticking out through the bottom surface of a flange (e.g. after lifting a tower section connected with this flange) may be advantageous.

A flange according to the invention comprises an annular arrangement of openings, especially inclined openings (since the invention is especially advantageous for X-flanges), wherein the flange is especially welded to a tower section. the flange comprises a plurality of stud systems according to the invention that are arranged in the openings. Thus, the stud systems are pre-installed in the flange as mentioned above. Preferably, the spacer tubes of a plurality of stud systems are connected with each other with a connection element as further described below, to easily and quickly remove the spacer tubes.

A method according to the invention is advantageous for assembling a tower, especially a wind turbine tower. This tower comprising tower sections, essentially each equipped with a flange, especially a flange according to the invention (at least flanges intended to be the upper flanges), on each face. The flanges comprise annular arrangements of threaded blind openings. The method comprises the following steps:
- Arranging a tower section on top of a further tower section so that annular arrangements of openings of the flanges accord to each other to receive a set of fasteners for connecting the flanges. Thus, tower sections comprising corresponding flanges at their ends are put upon another so that the flanges and their corresponding openings meet and fit.
- Arranging a number of stud systems according to the invention in a corresponding number of openings of the flanges from above prior or after the arrangement of the tower segments. This may result in a flange pre-equipped with stud systems. Although it is possible to install only one stud system it is preferred that "number" refers to a plurality of stud systems, e.g. covering essentially all through openings of a flange.
- Removing of a number of spacer tubes from the stud bolt of at least one arranged stud system so that the stud bolt is able to fall in the corresponding opening. The stud bolts can be removed separately or together, e.g. wherein the spacer tubes are connected by a rope and the rope is torn. It is clear that the flange with the stud system should be positioned such that the studs can fall down in the openings for the flange by gravity.
- Forming a permanent connection between the tower section and the further tower section by the stud bolts. This is e.g. achieved by screwing the threaded end of the stud bolts into the threads of the threaded blind openings and possibly screwing the nut on the head end until the flanges are fastened together. The connection is "permanent" in the sense that it may endure for the lifetime of the structure.

A tower, especially a wind turbine tower, comprising a plurality of essentially cylindrical tower sections equipped with flanges and permanently connected by stud bolts inserted through the inclined openings of the flanges may be provided by a method according to the invention. Due tc the safer handling of the threads of the bolts and the flanges, especially due to the possibility to provide pre-equipped flanges, the risk of damaging surfaces and threads is seriously reduced. This does not only mean that the construction of the tower is faster and cheaper (no need to repair damaged threads), but also that the tower is less affected by environmental conditions, since protective layers on the flange or in the blind holes or around the stud bolts are not damaged. Thus, due to the invention, the inner corrosion of flanges or the corrosion of stud bolts is seriously reduced resulting in an improvement of the stability of the whole tower.

Particularly advantageous embodiments and features of the invention are given by the dependent claims, as revealed in the following description. Features of different claim categories may be combined as appropriate to give further embodiments not described herein.

According to a preferred stud system, the head end is threaded and the stud bolt comprises a nut on the threaded head end as stopping means. Thus nut can also be used for fastening the connection between two flanges after the stud bolt is screwed into the threaded blind opening of a flange. The stopping means could also be a bolt head.

Preferably the stud bolt also comprises a washer, and/or a bolt extender or an extender-washer representing a combination of washer and a bolt extender, each component is arranged around the stud bolt. A washer is preferably arranged between nut and spacer tube. A bolt extender or an extender washer is preferably arranged around the stud bolt at the far side of the spacer tube seen from the nut. For practical reasons it is easier to keep the bolt extender or the extender-washer at the bottom, since there it could absorb the possible impact of the nut dropping down during installation.

As said above, when the spacer tubes are pulled laterally, the stud bolts will fall down in the openings of a flange. However, this comes with a risk of the threaded end of the stud bolt damaging itself or the thread of the blind hole upon dropping due to the impact of stud head hitting the thread. When hitting the thread, not only a protective layer or surface may be damaged, but also the thread of the opening or the stud bolt may be deformed. The problem of damaging the internal threads of X-flanges due to dropping bolts into the respective holes arose especially after developing the X-flange.

According to a preferred stud system, the nut is arranged such that a remaining connecting-length between the nut, or especially the washer, and the tip of the threaded end is shorter than the predefined opening-length plus the predefined non-threaded length. It is further preferred that the thread of the head end is designed such that the nut can be turned in order to increase the connecting length.

According to a preferred method, a number of stud systems with the special positioning of the nut described before are arranged in a corresponding number of openings of a flange (especially the upper flange), comprising the additional step of after removing of the number of spacer tubes: increasing the connecting length of the stud bolt by turning the nut along the threaded part of the head end until the connecting length is longer than the predefined opening-length plus the predefined non-threaded length.

Thus, when the stud bolt falls down, the fallen stud bolt does not touch the thread of the threaded blind opening, i.e. the remaining connecting length of a stud bolt from the nut to the tip is shorter than the predefined opening length plus the predefined non-threaded length. Thus, when removing the spacer tube, the stud bolt will fall in the opening until the tip of its threaded end stops in a position before the thread of the threaded blind opening. Then the nut can be moved upwards the head end causing the stud bolt to smoothly touch the thread. After that the stud bolt may be screwed into the thread and the flanges are fastened by fastening the nut.

According to a preferred stud system, the spacer tube is formed by at least two spacer segments, a first spacer segment and a second spacer segment, arranged adjacent to another. Thus, the two spacer segments are stringed on the stud bolt and can be individually removed. It is preferred that the first spacer segment and the second spacer segment are movably connected with each other, preferably such that after removing the first spacer segment the removed first spacer segment still clings to the second spacer segment. This will reduce the effort to collect removed spacer tubes after construction. It is further preferred that the connection is achieved by connection loops, especially made of wire or string.

According to a preferred method applicable for such segmented spacer tubes, a number of stud systems comprising such segmented spacer tubes are arranged in a corresponding number of openings of a flange. The method comprises the additional step of after removing a first spacer segment from a stud bolt and falling of the stud bolt in the corresponding opening: removing a second spacer segment from the stud bolt to bring the stud bolt in connection with a thread of the opening. It is preferred that the length of the first spacer element is chosen such that the fallen stud bolt does not touch the thread of the threaded blind opening, i.e. the remaining connecting length of a stud bolt comprising only the second spacer element at the stopping means is shorter than the predefined opening length plus the predefined non-threaded length. Thus, when removing the first spacer segment, the stud bolt will fall in the opening until a position before the thread of the threaded blind opening. Then the second spacer segment can be removed causing the stud bolt to touch the thread with a much lower impact. After that the stud bolt may be screwed into the thread.

It is further preferred, when the first spacer segment and the second spacer segment are movably connected with each other, to perform the removing procedure of the first spacer segment such that the removed first spacer segment still clings to the non-removed second spacer segment.

The advantage of the above embodiments is the protection of the internal flange threads while dropping the stud bolts into their respective bolt holes.

According to a preferred stud system, the length of the spacer tube is such that when arranged at the stopping means the remaining length of the intermediate portion that is not covered by the spacer tube together with the length of the threaded end is shorter than the predefined opening-length. Thus, stud systems pre-installed on a respective flange do not protrude from the bottom of the flange so that the arrangement on a corresponding flange is easier.

According to a preferred stud system, the spacer tube is made from metal, cardboard, wood or a (dense) polymer, especially polyethylene or polyprophylene.

The spacer tube may have arbitrary longitudinal shapes, especially prism-shapes, such as a hexagonal or square tube. According to a preferred stud system, the spacer tube has a cylindrical shape.

It is further preferred that a part of the circumference is removed, creating an open C-section. It is preferred that the width of the opening is less than a diameter of the intermediate portion of the stud bolt so that the spacer tube does not fall from the stud bolt itself, but can be removed by pulling it sideways from the stud bolt, wherein the width of the opening is preferably bigger than 90% of the diameter of the intermediate portion. This shape is advantageous for laterally removing the spacer tube from the stud bolt.

According to a preferred method, the openings of the flanges are inclined relative to the vertical direction, especially by at least 5°, preferably by at least more than 10°, but especially less than 45°, and wherein a number of stud systems is arranged in a corresponding number of the inclined openings of the flanges from above.

According to a preferred embodiment of the invention, the spacer tube of a stud system comprises a connection loop, e.g. a filament loop, a bail, a lug or a hook. Although it is generally preferred that the loops are closed, is can be also preferred depending on the application that the loops are open (hooks). Depending on the application, it is preferred that the loops are deformable, e.g. made of string, wire or steel cable, or rigid, especially as a part of the structure of the spacer tube (such as a pot handle).

Using a plurality of such stud systems, the connection loops can advantageously be connected with each other by a connection element. It is preferred (in the course of the construction method) that the spacer tubes are removed by moving, especially by pulling, the connection element such that the spacer tubes are laterally removed from the respective stud bolts. The connection element is preferably elongated and flexible and is particularly preferably a rope or a chain.

Although it is preferred that the connection element is lead through the connection loops, it is also preferred, depending on the application, that the connection element is otherwise fastened to the spacer tubes, e.g. by gluing or casting it into the material of the spacer tubes so that the spacer tubes have a defined distance. It is also possible that the connection element is a (thin) tape that is clamped between the surface of the stud bolts and the inner surface of the spacer tubes, e.g. entering and exiting through a longitudinal slit of the spacer tube. By pulling and straightening the tape, the spacer tube will be removed laterally from the stud bolt.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a cross section of a flange connection with a stud bolt according to the prior art.
Figure 2 shows a perspective view on a preferred stud system according to the invention.
Figure 3 shows a perspective view on a flange equipped with stud systems according to the invention.
Figure 4 shows a cross section of a flange connection with a preferred stud system according to the invention.
Figure 5 shows the procedure of forming a flange connection with a stud system according to figure 4.
Figure 6 shows a cross section of a flange connection with a preferred stud system according to the invention.
Figure 7 shows the procedure of forming a flange connection with a stud system according to figure 6.
Figure 8 shows a cross section of a flange connection with a preferred stud system according to the invention.
Figure 9 shows the procedure of forming a flange connection with a stud system according to figure 8.
Figure 10 shows a perspective view on a spacer tube comprising two spacer segments.
Figure 11 shows a tower comprising stacked tower sections connected by flanges according to the invention.

In the diagrams, like numbers refer to like objects throughout. Objects in the diagrams are not necessarily drawn to scale.

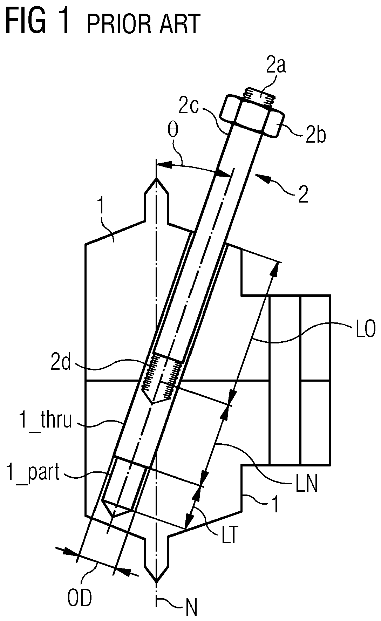

Figure 1 shows a cross section of a flange connection with a stud bolt 2 according to the prior art. Each flange has a primary bolt circle comprising an annular arrangement of inclined openings 1_thru, 1_part to receive a set of fasteners (the stud bolts 2) for connecting the flange 1 to the complementary flange 1. An inclined opening 1_thru, 1_part of the primary bolt circle is characterized by the angle of inclination θ subtended between its longitudinal axis (dash dotted line) and a surface normal N of the flange connection face. The flange 1 also comprises a body section (L-part) with a secondary bolt circle comprising an annular arrangement of openings (vertical hole at the right side of the flange) to receive a set of fasteners for connecting the flange 1 to an interim structure or to the complementary flange 1.

The stud bolt 2 can theoretically be divided into three parts: the head end 2a, that is threaded here and provided with a nut 2b, the threaded end 2d, with which the stud bolt 2 is screwed into the thread of the threaded blind opening 1_part, and an intermediate portion 2c that may be (partly) threaded or (partly) a shank. The length of the hole in the upper flange segment is predefined and the predefined "opening-length" LO. The length of the non-threaded part of the blind opening 1_part in the lower flange 1 is the predefined non-threaded length LN, and the length of the threaded part of the blind opening 1_part in the lower flange 1 is the predefined threaded length LT. Both openings 1_thru, 1_part have a predefined opening diameter OD at least concerning the non-threaded part.

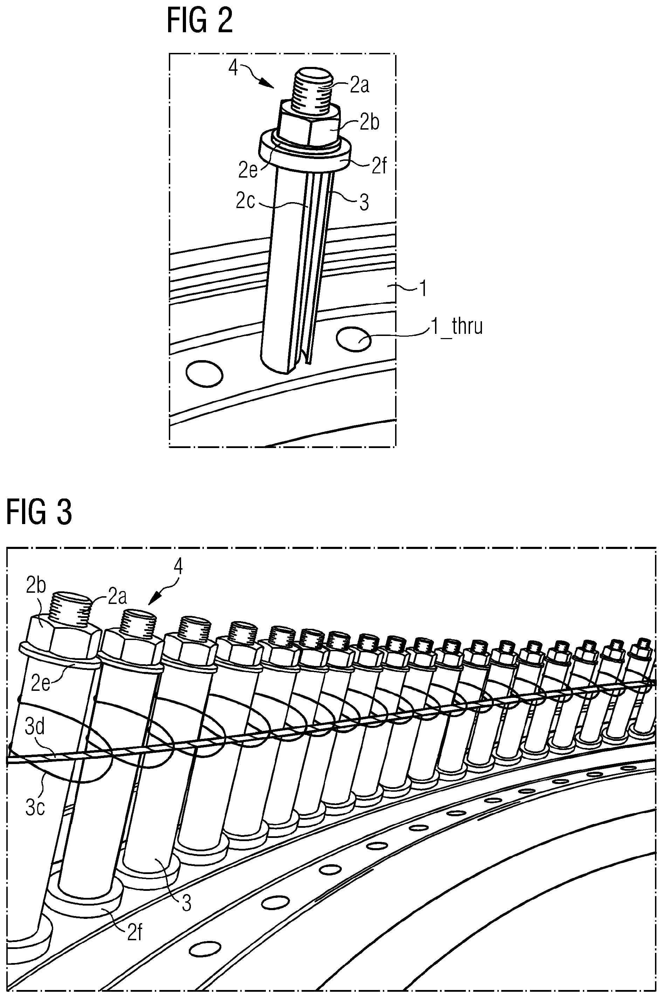

Figure 2 shows a perspective view on a preferred stud system 4 according to the invention. It comprises a stud bolt 2 like shown in figure 1 and a spacer tube 3. In difference to the stud bolt 2 of figure 1, the preferred stud bolt 2 shown here additionally comprises a washer 2e and an bolt extender 2f.

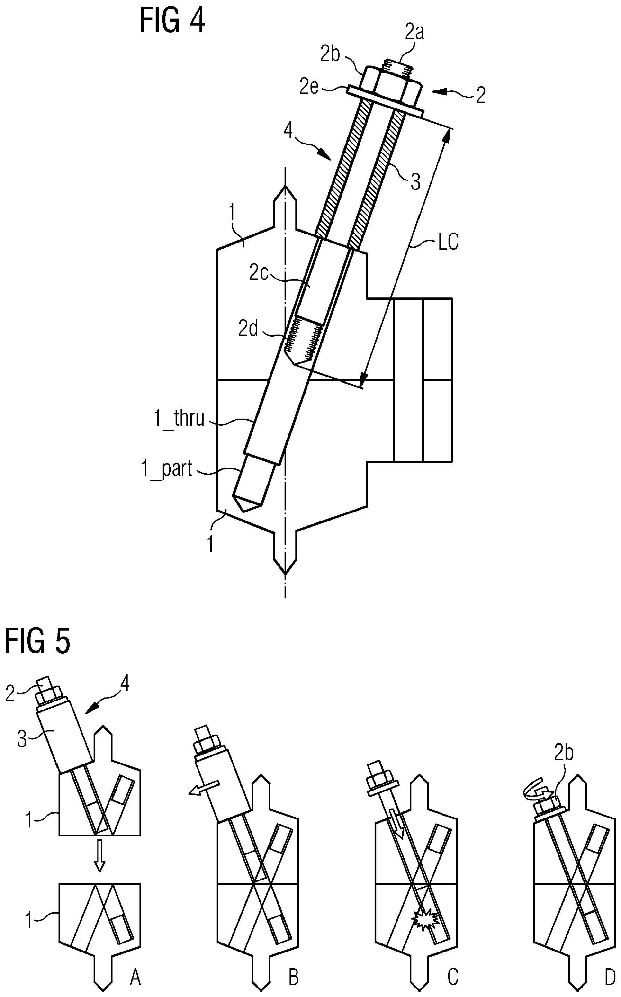

The stud system is arranged in an opening 1_thru of a flange 1. This is possible because of the spacer tube 3 that prevents the stud bolt 2 from falling into the opening 1_thru, but only sticking in it with a fraction of its length (see e.g. figure 4). The spacer tube 3 partly encompasses the stud bolt 2 with an outer diameter bigger than the predefined opening-diameter OD (see figure 1) and is prevented from slipping over the head end 2a of the stud bolt 2 by the nut 2b acting as stopping means 2b. The spacer tube 3 is constructed such that it can be removed laterally from the stud bolt 2 due to a slit that can be seen over the whole length of the spacer tube 3.

Figure 3 shows a perspective view on a flange 1 equipped with stud systems 4 according to the invention. The stud systems are mainly the same as shown in figure 2 with the differences that the bolt extender 2f is arranged between flange 1 and spacer tube 3 and that the spacer tubes comprise filament loops 3c as connection loops 3c, wherein the filament loops 3c of all spacer tubes 3 are connected with each other by a rope serving as connection element 2d. By pulling this rope, the spacer tubes 3 could be quickly removed from the stud bolts 2 of the stud system 4.

Figure 4 shows a cross section of a flange connection with a preferred stud system 4 according to the invention, similar to the stud system 4 shown in figure 2 (only without a bolt extender 2f). It can be seen that the spacer tube 3 prevents the tip of the stud bolt 2 from protruding out of the bottom of the flange 1. The distance between the washer 2e and the tip of the threaded end 2d is the connecting-length LC. This is the length with that the stud bolt would extend into the opening 1_thru, 1_part if there were no spacer tube 3.

Figure 5 shows the procedure of forming a flange connection with a stud system 4 according to figure 4.

In the left picture A, the flanges 1 are arranged upon another. Since the stud system 4 does not protrude from the bottom of the upper flange, an easy adjustment is possible.

In the next picture B, the spacer tube 3 is removed and the stud bolt glides down in the opening 1_thru, 1_part of the flange.

In the next picture C, the threaded end 2d of the stud bolt 2 hits the thread of the blind opening 1_part.

Now, in picture D, the stud bolt 2 can be screwed into the thread and the nut 2b can be fastened to connect the flanges 1 with each other.

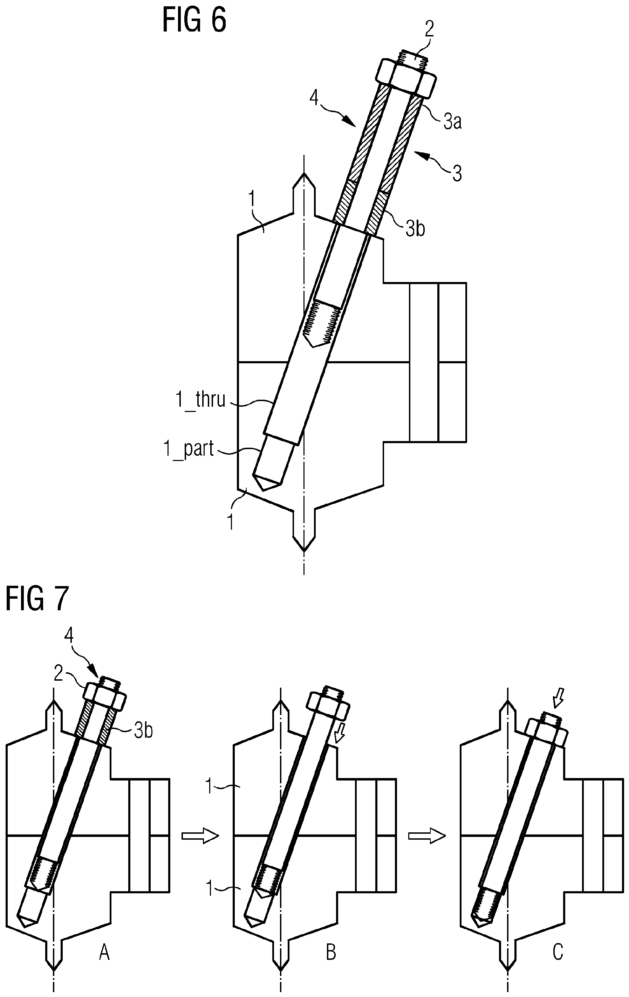

Figure 6 shows a cross section of a flange connection with a stud system 4 according to the invention. This stud system 4 is similar to the stud system shown in figure 4 with the difference that the spacer tube 3 is segmented into a first spacer segment 3a and a second spacer segment 3b. These two spacer segments 3a, 3b can be removed separately from the stud bolt 2.

Figure 7 shows the procedure of forming a flange connection with a stud system 4 according to figure 6.

In the left picture A, the flanges 1 are arranged upon another and the first spacer tube 3a is removed. The stud bolt glides down in the opening 1_thru, 1_part of the flange, but stops shortly before the thread of the blind opening 1_part due to the second spacer segment. Thus, the thread is not damaged by the impact of the movement of the stud bolt 2.

In the next picture B, the second spacer tube 3b is removed. Since the tip of the stud bolt 2 is not far from the thread of the blind opening 1_part, the stud bolt 2 touches the thread of the blind opening 1_part very smoothly without damaging the thread.

Now, in picture C, the stud bolt 2 can be screwed into the thread and the nut 2b can be fastened to connect the flanges 1 with each other.

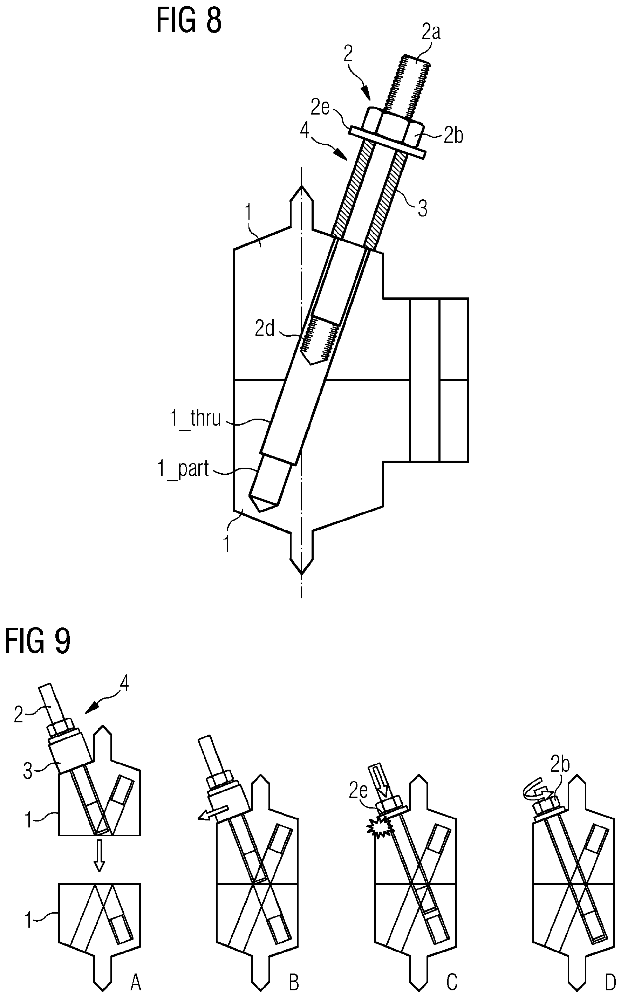

Figure 8 shows a cross section of a flange connection with a stud system 4 according to the invention. This stud system 4 is similar to the stud system shown in figure 4 with the difference that the nut 2b has been positioned nearer to the threaded end 2d. The head end 2a is threaded so that the nut 2b can be screwed up and down the head end 2a.

Figure 9 shows the procedure of forming a flange connection with a stud system 4 according to figure 8.

In the left picture A, the flanges 1 are arranged upon another. Since the stud system 4 does not protrude from the bottom of the upper flange, an easy adjustment is possible.

In the next picture B, the spacer tube 3 is removed and the stud bolt glides down in the opening 1_thru, 1_part of the flange.

In the next picture C, the threaded end 2d of the stud bolt 2 does not hit the thread of the blind opening 1_part like in figure 5, but stops near the thread of the blind opening 1_part as in figure 7. The star at the washer indicates that the impact occurs there. A damage to the surface of the flange may be prevented by positioning the washer 2e under the spacer tube 3 (between spacer tube 3 and flange 1). Also a bolt extender 2f arranged as shown in figure 3 may prevent possible damage.

In picture D, the nut is unscrewed in the direction of the head end 2a so that the tip of the stud bolt 2 smoothly touches the thread of the blind opening 1_part. Now (after unscrewing the nut 2b a little bit more), the stud bolt 2 can be screwed into the thread and the nut 2b can be fastened to connect the flanges 1 with each other.

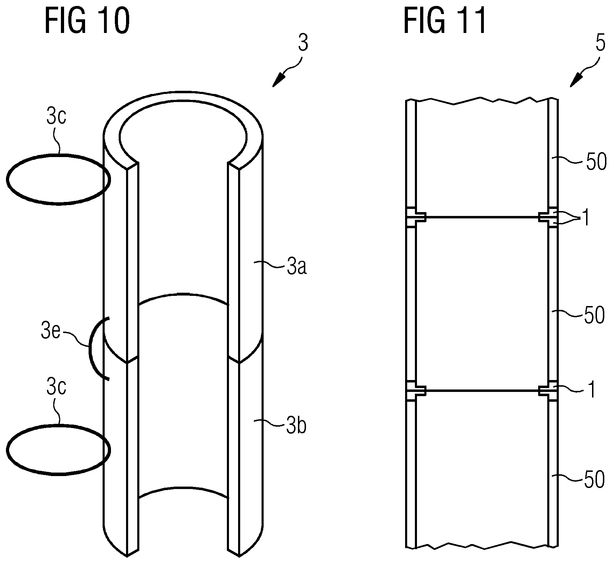

Figure 10 shows a perspective view on a spacer tube 3 that is formed by two spacer segments 3a, 3b, a first spacer segment 3a and a second spacer segment 3b, that are arranged upon another. Here the first spacer segment 3a and the second spacer segment 3b are movably connected with each other by a connection string 3e. For removing the spacer segments 3a, 3b, each spacer segment 3a, 3b comprises a filament loop 3c, especially made of wire or string. Due to the special connection of the spacer segments 3a, 3b, after removing the first spacer segment 3a, it still clings to the second spacer segment 3b. The filament loops 3c are used to connect several spacer segments 3a, 3b with spacer segments 3a, 3b of different stud systems (see e.g. figure 3).

Figure 11 shows a tower 5, such as a wind turbine tower, comprising tower sections 50 "stacked" on top of each other and connected by flanges 1 according to the invention. The flanges are outlined without further details. The way of equipping and fastening the flanges is described more accurately in the preceding figures.

Although the present invention has been disclosed in the form of preferred embodiments and variations thereon, it will be understood that numerous additional modifications and variations could be made thereto without departing from the scope of the invention as defined by the appended claims.

For the sake of clarity, it is to be understood that the use of "a" or "an" throughout this application does not exclude a plurality, and "comprising" does not exclude other steps or elements.

## Claims

1. A stud system (4) for connecting a first flange (1) to a second flange (1) of a tower (5), the flanges (1) comprising annular arrangements of openings (1_thru) in the first flange (1) corresponding to annular arrangements of threaded blind openings (1_part) in the second flange (1), with a predefined opening-length (LO) and a predefined opening-diameter (DO) of the openings (1_thru) in the first flange (1) and a predefined non-threaded length (LN) and a predefined threaded length (LT) of the threaded blind openings (1_part) in the second flange (1), the stud system (4) comprising:
- a stud bolt (2) with a head end (2a), a threaded end (2d) and an intermediate portion (2c) between the head end (2a) and the threaded end (2d) , **characterised in that** the stud system further comprises:
- a spacer tube (3) partly encompassing the stud bolt (2) with an outer diameter bigger than the predefined opening-diameter (OD),
wherein the stud bolt (2) comprises stopping means (2b) at the head end (2a), preventing the spacer tube (3) from slipping over the head end (2a),
and wherein the spacer tube (3) is constructed such that it can be removed laterally from the stud bolt (2).

2. The stud system according to claim 1, wherein the head end (2a) is threaded and the stud bolt (2) comprises a nut (2b) on the threaded head (2a) end as stopping means (2b),
preferably wherein the stud bolt (2) also comprises a washer (2e) arranged around the stud bolt (2), especially between nut (2b) and spacer tube (3) and/or
preferably wherein the stud bolt (2) also comprises a bolt extender (2f) arranged around the stud bolt (2), especially at the far side of the spacer tube (3) seen from the nut (2b) and/or
preferably wherein the stud bolt (2) also comprises an extender-washer representing a combination of washer (2e) and a bolt extender (2f) arranged around the stud bolt (2), especially at the far side of the spacer tube (3) seen from the nut (2b).

3. The stud system according to claim 2, wherein the nut (2b) is arranged such that a remaining connecting-length (LC) between the nut (2b), or especially the washer (2e), and the tip of the threaded end (2d) is shorter than the predefined opening-length (LO) plus the predefined non-threaded length (LN),
wherein the thread of the head end (2a) is preferably designed such that the nut (2b) can be turned in order to increase the connecting length (LC).

4. The stud system according to any of the preceding claims, wherein the spacer tube (3) is formed by at least two spacer segments (3a, 3b), a first spacer segment (3a) and a second spacer segment (3b), arranged adjacent to another,
preferably wherein the first spacer segment (3a) and the second spacer segment (3b) are movably connected with each other, preferably such that after removing the first spacer segment (3a) the removed first spacer segment (3a) still clings to the second spacer segment (3b),
preferably wherein the connection is achieved by connection loops (3c), especially made of wire or string.

5. The stud system according to any of the preceding claims, wherein the length of the spacer tube (3) is such that when arranged at the stopping means (2b) the remaining length of the intermediate portion (2c) that is not covered by the spacer tube (3) together with the length of the threaded end (2d) is shorter than the predefined opening-length (LO).

6. The stud system according to any of the preceding claims, wherein the spacer tube (3) is made from metal, cardboard, wood or a [dense] polymer, especially polyethylene or polyprophylene.

7. The stud system according to any of the preceding claims, wherein the spacer tube (3) has a cylindrical shape with part of the circumference removed, creating an open C-section, wherein the width of the opening is preferably less than a diameter of the intermediate portion (2c) of the stud bolt (2) so that the spacer tube (3) does not fall from the stud bolt (2) itself, but can be removed by pulling it sideways from the stud bolt (2), wherein the width of the opening is preferably bigger than 90% of the diameter of the intermediate portion (2c).

8. A flange (1) with an annular arrangement of openings (1_thru), especially inclined openings, the flange (1) comprising a plurality of stud systems (4) according to any of the preceding claims arranged in the openings (1_thru).

9. A method of assembling a tower (5), especially a wind turbine tower (5), comprising tower sections (50), essentially each equipped with a flange (1), especially according to claim 8, on each face, the flanges comprising annular arrangements of threaded blind openings (1_part), which method comprises the steps:
- arranging a tower section (50) on top of a further tower section (50) so that annular arrangements of openings (1_thru, 1_part) of the flanges (1) accord to each other to receive a set of fasteners for connecting the flanges (1),
- arranging a number of stud systems (4) according to any of claims 1 to 7 in a corresponding number of openings (1_thru, 1_part) of the flanges (1) from above prior or after the arrangement of the tower segments,
- removing of a number of spacer tubes (3) from the stud bolt (2) of at least one arranged stud system (4) so that the stud bolt (2) is able to fall in the corresponding opening (1_thru),
- forming a permanent connection between the tower section (50) and the further tower section (50) by the stud bolts (2).

10. The method according to claim 9, wherein the openings (1_thru, 1_part) of the flanges (1) are inclined relative to the vertical direction, especially by at least 5°, preferably by at least more than 10°, but especially less than 45°, and wherein a number of stud systems (4) according to any of claims 1 to 7 is arranged in a corresponding number of the inclined openings (1_thru, 1_part) of the flanges (1) from above.

11. The method according to claim 9 or 10, wherein spacer tubes (3) of a plurality of stud systems (4) according to any of claims 1 to 7 comprise connection loops (3c), wherein the connection loops (3c) are connected with another by a connection element (3d), wherein the spacer tubes (3) are preferably removed by moving, especially by pulling, the connection element (3d) such that the spacer tubes (3) are laterally removed from the respective stud bolts (2), wherein the connection element (2d) is preferably flexible, particularly preferably a rope or a chain.

12. The method according to any of claims 9 to 11, wherein a number of stud systems (4) according to any of claims 4 to 7 are arranged in a corresponding number of openings (1_thru, 1_part) of a flange (1), comprising the additional step of
- after removing of the number of spacer tubes (3):
increasing the connecting length of the stud bolt (2) by turning the nut (2b) along the threaded part of the head end (2a) until the connecting length (LC) is longer than the predefined opening-length (LO) plus the predefined non-threaded length (LN).

13. The method according to any of claims 9 to 12, wherein a number of stud systems according to any of claims 5 to 7 are arranged in a corresponding number of openings (1_thru, 1_part) of a flange (1), comprising the additional step of
- after removing a first spacer segment (3a) from a stud bolt (2) and falling of the stud bolt (2) in the corresponding opening (1_thru, 1_part): removing a second spacer segment (3b) from the stud bolt (2) to bring the stud bolt (2) in connection with a thread of the opening (1_part).

14. The method according to claim 13, wherein the first spacer segment (3a) and the second spacer segment (3b) are movably connected with each other and the removing procedure of the first spacer segment (3a) is performed such that the removed first spacer segment (3a) still clings to the non-removed second spacer segment (3b).

## Patentansprüche

1. Bolzensystem (4) zum Verbinden eines ersten Flanschs (1) mit einem zweiten Flansch (1) eines Turms (5), wobei die Flansche (1) ringförmige Anordnungen von Öffnungen (1_thru)in dem ersten Flansch (1) umfassen, die ringförmigen Anordnungen von mit Gewinde versehenen Blindöffnungen (1_part) in dem zweiten Flansch (1) entsprechen, mit einer vordefinierten Öffnungslänge (LO) und einem vordefinierten Öffnungsdurchmesser (DO) der Öffnungen (1_thru) in dem ersten Flansch (1) und einer vordefinierten gewindefreien Länge (LN) und einer vordefinierten mit Gewinde versehenen Länge (LT) der mit Gewinde versehenen Blindöffnungen (1_part) in dem zweiten Flansch (1), wobei das Bolzensystem (4) Folgendes umfasst:
- eine Bolzenschraube (2) mit einem Kopfende (2a), einem mit Gewinde versehenen Ende (2d) und einem Zwischenabschnitt (2c) zwischen dem Kopfende (2a) und dem mit Gewinde versehenen Ende (2d), **dadurch gekennzeichnet, dass** das Bolzensystem ferner Folgendes umfasst:
- ein Abstandsrohr (3), das die Bolzenschraube (2) teilweise umschließt, mit einem Außendurchmesser, der größer als der vordefinierte Öffnungsdurchmesser (OD) ist,
wobei die Bolzenschraube (2) Anschlagmittel (2b) am Kopfende (2a) umfasst, die verhindern, dass das Abstandsrohr (3) über das Kopfende (2a) rutscht,
und wobei das Abstandsrohr (3) derart konzipiert ist, dass es lateral von der Bolzenschraube (2) entfernt werden kann.

2. Bolzensystem nach Anspruch 1, wobei das Kopfende (2a) mit einem Gewinde versehen ist und die Bolzenschraube (2) eine Mutter (2b) auf dem mit Gewinde versehenen Kopfende (2a) als Anschlagmittel (2b) aufweist,
vorzugsweise wobei die Bolzenschraube (2) auch eine um die Bolzenschraube (2) herum, insbesondere zwischen der Mutter (2b) und dem Abstandsrohr (3), angeordnete Unterlegscheibe (2e) umfasst und/oder
vorzugsweise wobei die Bolzenschraube (2) auch eine um die Bolzenschraube (2) herum, insbesondere an der von der Mutter (2b) aus gesehen entfernten Seite des Abstandsrohrs (3), angeordnete Schraubenverlängerung (2f) umfasst und/oder
vorzugsweise wobei die Bolzenschraube (2) auch eine um die Bolzenschraube (2) herum, insbesondere an der von der Mutter (2b) aus gesehen entfernten Seite des Abstandsrohrs (3) angeordnete Verlängerungsunterlegscheibe umfasst, die eine Kombination aus Unterlegscheibe (2e) und Schraubenverlängerung (2f) darstellt.

3. Bolzensystem nach Anspruch 2, wobei die Mutter (2b) so angeordnet ist, dass eine verbleibende Verbindungslänge (LC) zwischen der Mutter (2b) oder insbesondere der Unterlegscheibe (2e) und der Spitze des mit Gewinde versehenen Endes (2d) kürzer als die vordefinierte Öffnungslänge (LO) plus die vordefinierte gewindefreie Länge (LN) ist,
wobei das Gewinde des Kopfendes (2a) vorzugsweise so ausgestaltet ist, dass die Mutter (2b) zur Vergrößerung der Verbindungslänge (LC) drehbar ist.

4. Bolzensystem nach einem der vorhergehenden Ansprüche, wobei das Abstandsrohr (3) durch mindestens zwei Abstandssegmente (3a, 3b), ein erstes Abstandssegment (3a) und ein zweites Abstandssegment (3b), gebildet ist, die benachbart zueinander angeordnet sind,
vorzugsweise wobei das erste Abstandssegment (3a) und das zweite Abstandssegment (3b) beweglich miteinander verbunden sind, vorzugsweise derart, dass nach Entfernen des ersten Abstandssegments (3a) das entfernte erste Abstandssegment (3a) immer noch an dem zweiten Abstandssegment (3b) haftet,
vorzugsweise wobei die Verbindung durch Verbindungsschlaufen (3c), insbesondere aus Draht oder Schnur, erreicht wird.

5. Bolzensystem nach einem der vorhergehenden Ansprüche, wobei die Länge des Abstandsrohrs (3) derart ist, dass, wenn es an dem Anschlagmittel (2b) angeordnet ist, die verbleibende Länge des Zwischenabschnitts (2c), die nicht von dem Abstandsrohr (3) bedeckt ist, zusammen mit der Länge des mit Gewinde versehenen Endes (2d) kürzer als die vordefinierte Öffnungslänge (LO) ist.

6. Bolzensystem nach einem der vorhergehenden Ansprüche, wobei das Abstandsrohr (3) aus Metall, Pappe, Holz oder einem [dichten] Polymer, insbesondere Polyethylen oder Polyprophylen, hergestellt ist.

7. Bolzensystem nach einem der vorhergehenden Ansprüche, wobei das Abstandsrohr (3) eine zylindrische Form aufweist, wobei ein Teil des Umfangs entfernt ist, wodurch ein offener C-Abschnitt erzeugt wird, wobei die Breite der Öffnung vorzugsweise kleiner als ein Durchmesser des Zwischenabschnitts (2c) der Bolzenschraube (2) ist, so dass das Abstandsrohr (3) nicht von der Bolzenschraube (2) selbst abfällt, sondern durch seitliches Abziehen von der Bolzenschraube (2) entfernt werden kann, wobei die Breite der Öffnung vorzugsweise größer als 90 % des Durchmessers des Zwischenabschnitts (2c) ist.

8. Flansch (1) mit einer ringförmigen Anordnung von Öffnungen (1_thru), insbesondere geneigten Öffnungen, wobei der Flansch (1) mehrere Bolzensysteme (4) nach einem der vorhergehenden Ansprüche umfasst, die in den Öffnungen (1_thru)angeordnet sind.

9. Verfahren zum Zusammenbauen eines Turms (5), insbesondere eines Windenergieanlagenturms (5), der Turmabschnitte (50) umfasst, die im Wesentlichen jeweils mit einem Flansch (1), insbesondere nach Anspruch 8, auf jeder Fläche ausgestattet sind, wobei die Flansche ringförmige Anordnungen von mit Gewinde versehenen Blindöffnungen (1_part) umfassen, wobei das Verfahren die folgenden Schritte umfasst:
- Anordnen eines Turmabschnitts (50) auf einem weiteren Turmabschnitt (50), so dass sich ringförmige Anordnungen von Öffnungen (1_thru, 1_part) der Flansche (1) decken, um einen Satz von Befestigungselementen zum Verbinden der Flansche (1) aufzunehmen,
- Anordnen einer Anzahl von Bolzensystemen (4) nach einem der Ansprüche 1 bis 7 in einer entsprechenden Anzahl von Öffnungen (1_thru, 1_part) der Flansche (1) von oben vor oder nach der Anordnung der Turmsegmente,
- Entfernen einer Anzahl von Abstandsrohren (3) von der Bolzenschraube (2) mindestens eines angeordneten Bolzensystems (4), so dass die Bolzenschraube (2) in die entsprechende Öffnung (1_thru) fallen kann,
- Bilden einer dauerhaften Verbindung zwischen dem Turmabschnitt (50) und dem weiteren Turmabschnitt (50) durch die Bolzenschrauben (2).

10. Verfahren nach Anspruch 9, wobei die Öffnungen (1_thru, 1_part) der Flansche (1) relativ zur vertikalen Richtung, insbesondere um mindestens 5°, vorzugsweise um mindestens mehr als 10°, insbesondere jedoch weniger als 45°, geneigt sind, und wobei eine Anzahl von Bolzensystemen (4) nach einem der Ansprüche 1 bis 7 in einer entsprechenden Anzahl der geneigten Öffnungen (1_thru, 1_part) der Flansche (1) von oben angeordnet wird.

11. Verfahren nach Anspruch 9 oder 10, wobei Abstandsrohre (3) mehrerer Bolzensysteme (4) nach einem der Ansprüche 1 bis 7 Verbindungsschlaufen (3c) umfassen, wobei die Verbindungsschlaufen (3c) durch ein Verbindungselement (3d) miteinander verbunden sind, wobei die Abstandsrohre (3) vorzugsweise durch Bewegen, insbesondere durch Ziehen, des Verbindungselements (3d) derart entfernt werden, dass die Abstandsrohre (3) lateral von den jeweiligen Bolzenschrauben (2) entfernt werden, wobei das Verbindungselement (2d) vorzugsweise flexibel, besonders bevorzugt ein Seil oder eine Kette, ist.

12. Verfahren nach einem der Ansprüche 9 bis 11, wobei eine Anzahl von Bolzensystemen (4) nach einem der Ansprüche 4 bis 7 in einer entsprechenden Anzahl von Öffnungen (1_thru, 1_part) eines Flanschs (1) angeordnet wird, umfassend den folgenden zusätzlichen Schritt
- nach Entfernen der Anzahl von Abstandsrohren (3): Vergrößern der Verbindungslänge der Bolzenschraube (2) durch Drehen der Mutter (2b) entlang des mit Gewinde versehenen Teils des Kopfendes (2a), bis die Verbindungslänge (LC) größer als die vordefinierte Öffnungslänge (LO) plus die vordefinierte gewindefreie Länge (LN) ist.

13. Verfahren nach einem der Ansprüche 9 bis 12, wobei eine Anzahl von Bolzensystemen nach einem der Ansprüche 5 bis 7 in einer entsprechenden Anzahl von Öffnungen (1_thru, 1_part) eines Flanschs (1) angeordnet wird, umfassend den folgenden zusätzlichen Schritt
- nach Entfernen eines ersten Abstandssegments (3a) von einer Bolzenschraube (2) und Fallen der Bolzenschraube (2) in die entsprechende Öffnung (1_thru, 1_part): Entfernen eines zweiten Abstandssegments (3b) von der Bolzenschraube (2), um die Bolzenschraube (2) mit einem Gewinde der Öffnung (1_part) in Verbindung zu bringen.

14. Verfahren nach Anspruch 13, wobei das erste Abstandssegment (3a) und das zweite Abstandssegment (3b) beweglich miteinander verbunden sind und der Entfernungsvorgang des ersten Abstandssegments (3a) so durchgeführt wird, dass das entfernte erste Abstandssegment (3a) immer noch an dem nicht entfernten zweiten Abstandssegment (3b) haftet.

## Revendications

1. Système de goujon (4) pour le raccordement d'une première bride (1) à une seconde bride (1) d'une tour (5), les brides (1) comprenant des agencements annulaires d'ouvertures (1_thru) dans la première bride (1) correspondant à des agencements annulaires d'ouvertures (1_part) borgnes filetées dans la seconde bride (1), avec une longueur d'ouverture (LO) prédéfinie et un diamètre d'ouverture (DO) prédéfini des ouvertures (1_thru) dans la première bride (1) et une longueur non filetée (LN) prédéfinie et une longueur filetée (LT) prédéfinie des ouvertures (1_part) borgnes filetées dans la seconde bride (1), le système de goujon (4) comprenant :
- un goujon (2) ayant une extrémité de tête (2a), une extrémité filetée (2d) et une portion intermédiaire (2c) entre l'extrémité de tête (2a) et l'extrémité filetée (2d),
**caractérisé en ce que** le système de goujon comprend en outre :
- un tube formant entretoise (3) englobant partiellement le goujon (2), ayant un diamètre externe supérieur au diamètre d'ouverture (OD) prédéfini,
dans lequel le goujon (2) comprend un moyen d'arrêt (2b) au niveau de l'extrémité de tête (2a), empêchant le tube formant entretoise (3) de glisser par-dessus l'extrémité de tête (2a),
et dans lequel le tube formant entretoise (3) est construit de sorte qu'il puisse être retiré latéralement du goujon (2).

2. Système de goujon selon la revendication 1, dans lequel l'extrémité de tête (2a) est filetée et le goujon (2) comprend un écrou (2b) sur l'extrémité de tête (2a) filetée en tant que moyen d'arrêt (2b),
de préférence dans lequel le goujon (2) comprend également une rondelle (2e) agencée autour du goujon (2), en particulier entre l'écrou (2b) et le tube formant entretoise (3) et/ou
de préférence dans lequel le goujon (2) comprend également un prolongateur de goujon (2f) agencé autour du goujon (2), en particulier au niveau du côté éloigné du tube formant entretoise (3) observé depuis l'écrou (2b) et/ou
de préférence dans lequel le goujon (2) comprend également une rondelle-prolongateur, représentant une combinaison d'une rondelle (2e) et d'un prolongateur de goujon (2f), agencée autour du goujon (2), en particulier au niveau du côté éloigné du tube formant entretoise (3) observé depuis l'écrou (2b).

3. Système de goujon selon la revendication 2, dans lequel l'écrou (2b) est agencé de sorte qu'une longueur de raccordement (LC) restante entre l'écrou (2b), ou en particulier la rondelle (2e), et la pointe de l'extrémité filetée (2d) soit plus courte que la longueur d'ouverture (LO) prédéfinie plus la longueur non filetée (LN) prédéfinie,
dans lequel le filetage de l'extrémité de tête (2a) est de préférence conçu de sorte que l'écrou (2b) puisse être tourné afin d'augmenter la longueur de raccordement (LC).

4. Système de goujon selon l'une quelconque des revendications précédentes, dans lequel le tube formant entretoise (3) est formé par au moins deux segments d'entretoise (3a, 3b), un premier segment d'entretoise (3a) et un second segment d'entretoise (3b), agencés de manière adjacente l'un à l'autre,
de préférence dans lequel le premier segment d'entretoise (3a) et le second segment d'entretoise (3b) sont raccordés de manière mobile l'un à l'autre, de préférence de sorte que, après le retrait du premier segment d'entretoise (3a), le premier segment d'entretoise (3a) retiré soit encore accroché au second segment d'entretoise (3b),
de préférence dans lequel le raccordement est accompli par des boucles de raccordement (3c), en particulier constituées d'un fil ou d'un cordon.

5. Système de goujon selon l'une quelconque des revendications précédentes, dans lequel la longueur du tube formant entretoise (3) est telle que, lorsqu'il est agencé au niveau du moyen d'arrêt (2b), la longueur restante de la portion intermédiaire (2c) qui n'est pas recouverte par le tube formant entretoise (3) conjointement avec la longueur de l'extrémité filetée (2d) est plus courte que la longueur d'ouverture (LO) prédéfinie.

6. Système de goujon selon l'une quelconque des revendications précédentes, dans lequel le tube formant entretoise (3) est constitué de métal, de carton, de bois ou d'un polymère [dense], en particulier de polyéthylène ou de polypropylène.

7. Système de goujon selon l'une quelconque des revendications précédentes, dans lequel le tube formant entretoise (3) possède une géométrie cylindrique avec une partie de la circonférence retirée, créant une section en C ouverte, dans lequel la largeur de l'ouverture est de préférence inférieure à un diamètre de la portion intermédiaire (2c) du goujon (2) de sorte que le tube formant entretoise (3) ne chute pas du goujon (2) lui-même, mais puisse être retiré en le tirant sur le côté à partir du goujon (2), dans lequel la largeur de l'ouverture est de préférence supérieure à 90 % du diamètre de la portion intermédiaire (2c).

8. Bride (1) ayant un agencement annulaire d'ouvertures (1_thru), en particulier d'ouvertures inclinées, la bride (1) comprenant une pluralité de systèmes de goujon (4) selon l'une quelconque des revendications précédentes agencés dans les ouvertures (1_thru).

9. Procédé d'assemblage d'une tour (5), en particulier d'une tour d'éolienne (5), comprenant des sections de tour (50), sensiblement chacune étant équipée d'une bride (1), en particulier selon la revendication 8, sur chaque face, les brides comprenant des agencements annulaires d'ouvertures (1_part) borgnes filetées, lequel procédé comprend les étapes :
- l'agencement d'une section de tour (50) sur le dessus d'une autre section de tour (50) de sorte que des agencements annulaires d'ouvertures (1_thru, 1_part) des brides (1) s'accordent les uns aux autres pour recevoir un ensemble d'attaches pour le raccordement des brides (1),
- l'agencement d'un certain nombre de systèmes de goujon (4) selon l'une quelconque des revendications 1 à 7 dans un nombre correspondant d'ouvertures (1_thru, 1_part) des brides (1) par le haut avant ou après l'agencement des segments de tour,
- le retrait d'un certain nombre de tubes formant entretoise (3) à partir du goujon (2) d'au moins un système de goujon (4) agencé de sorte que le goujon (2) soit apte à chuter dans l'ouverture (1_thru) correspondante,
- la formation d'un raccordement permanent entre la section de tour (50) et l'autre section de tour (50) par les goujons (2).

10. Procédé selon la revendication 9, dans lequel les ouvertures (1_thru, 1_part) des brides (1) sont inclinées par rapport à la direction verticale, en particulier d'au moins 5°, de préférence d'au moins plus de 10°, mais en particulier de moins de 45°, et dans lequel un certain nombre de systèmes de goujon (4) selon l'une quelconque des revendications 1 à 7 est agencé dans un nombre correspondant des ouvertures (1_thru, 1_part) inclinées des brides (1) par le haut.

11. Procédé selon la revendication 9 ou 10, dans lequel des tubes formant entretoise (3) d'une pluralité de systèmes de goujon (4) selon l'une quelconque des revendications 1 à 7 comprennent des boucles de raccordement (3c), dans lequel les boucles de raccordement (3c) sont raccordées les unes aux autres par un élément de raccordement (3d), dans lequel les tubes formant entretoise (3) sont de préférence retirés en déplaçant, en particulier en tirant, de l'élément de raccordement (3d) de sorte que les tubes formant entretoise (3) soient latéralement retirés des goujons (2) respectifs, dans lequel l'élément de raccordement (2d) est de préférence flexible, particulièrement de préférence une corde ou une chaîne.

12. Procédé selon l'une quelconque des revendications 9 à 11, dans lequel un certain nombre de systèmes de goujon (4) selon l'une quelconque des revendications 4 à 7 sont agencés dans un nombre correspondant d'ouvertures (1_thru, 1_part) d'une bride (1), comprenant l'étape supplémentaire de
- après le retrait du certain nombre de tubes formant entretoise (3) : l'augmentation de la longueur de raccordement du goujon (2) en tournant l'écrou (2b) le long de la partie filetée de l'extrémité de tête (2a) jusqu'à ce que la longueur de raccordement (LC) soit plus longue que la longueur d'ouverture (LO) prédéfinie plus la longueur non filetée (LN) prédéfinie.

13. Procédé selon l'une quelconque des revendications 9 à 12, dans lequel un certain nombre de systèmes de goujon selon l'une quelconque des revendications 5 à 7 sont agencés dans un nombre correspondant d'ouvertures (1_thru, 1_part) d'une bride (1), comprenant l'étape supplémentaire de
- après le retrait d'un premier segment d'entretoise (3a) d'un goujon (2) et la chute du goujon (2) dans l'ouverture (1_thru, 1_part) correspondante : le retrait d'un second segment d'entretoise (3b) du goujon (2) pour amener le goujon (2) en raccordement avec un filetage de l'ouverture (1_part).

14. Procédé selon la revendication 13, dans lequel le premier segment d'entretoise (3a) et le second segment d'entretoise (3b) sont raccordés de manière mobile l'un à l'autre et la procédure de retrait du premier segment d'entretoise (3a) est réalisée de sorte que le premier segment d'entretoise (3a) retiré soit encore accroché au second segment d'entretoise (3b) non retiré.
